# EUROPÄISCHE PATENTSCHRIFT

(11) **EP 0 775 332 B1**
(45) Veröffentlichungstag und Bekanntmachung des Hinweises auf die Patenterteilung: **10.05.2000**
(21) Anmeldenummer: 96905792.6
(22) Anmeldetag: 24.02.1996
(51) Int. Cl.: G05B 9/03, G05B 19/048

(54) **SICHERHEITSSCHALTERANORDNUNG**
SAFETY SWITCH ARRANGEMENT
ENSEMBLE COMMUTATEUR DE SECURITE

(30) Priorität: 11.03.1995 DE 19508841
(43) Veröffentlichungstag der Anmeldung: 28.05.1997
(73) Patentinhaber: Leuze electronic GmbH + Co., 73277 Owen/Teck (DE)
(72) Erfinder: LEHNER, Werner, D-82194 Gröbenzell (DE); HARTL, Paul, D-80797 München (DE); HABERER, Hermann, D-80999 München (DE)
(86) Internationale Anmeldenummer: EP9600769
(87) Internationale Veröffentlichungsnummer: WO9628769

(56) Entgegenhaltungen:
- DE-A- 3 513 357
- DE-A- 4 321 971
- GB-A- 2 007 883
- GB-A- 2 183 113
- PATENT ABSTRACTS OF JAPAN vol. 15, no. 455 (P-1277), 19.November 1991 & JP,A,03 192401 (JAPAN ELECTRON CONTROL SYST. CO.), 22.August 1991,

## Beschreibung

Die Erfindung betrifft eine Sicherheitsschalteranordnung gemäß der deutschen Offenlegungsschrift DE-A-44 41 070 (Offenlegungstag: 30.05.1996).

Die dort beschriebene zweikanalige Sicherheitsschalteranordnung weist Aktoren mit aus Halbleiterelementen bestehenden schalterartigen Mitteln auf. Diese Halbleiterelemente weisen im Gegensatz zu Relais keine verschleißanfälligen Kontakte auf.

Zur Durchführung der Funktionsüberprüfung der Aktoren ist in jedem Auswertekanal eine Rechnereinheit vorgesehen, wobei jede Rechnereinheit über zwei bidirektionale Zuleitungen mit dem Aktor verbunden ist. Die Rechnereinheiten, die vorzugsweise als Controller ausgebildet sind, können als Standardprodukte kostengünstig ohne zusätzlichen Schaltungsaufwand den Aktoren vorgeschaltet werden. In einer Vielzahl von Sensoren sind bereits Rechnereinheiten zur Steuerung der Sensorfunktionen integriert. In diesem Fall können diese Rechnereinheiten die für die Sicherheitsschalteranordnung notwendigen Funktionen zusätzlich abarbeiten, so daß der Schaltungsaufwand des Sensors weiter reduziert wird.

Zur Überwachung der Rechnereinheiten sind diese über eine bidirektionale Zuleitung verbunden.

Die komplette Ansteuerung und Funktionsüberwachung der Aktoren erfolgt zentral in den Rechnereinheiten. Damit die Funktionsüberwachung von der Übermittlung der Sensorsignale physikalisch getrennt ist, sind zur Übermittlung der Schaltimpulse des Sensors und zur Übermittlung von Testimpulsen zur Funktionsüberprüfung von der Rechnereinheit an den Aktor separate bidirektionale Zuleitungen vorgesehen, was die Funktionssicherheit der Anordnung erhöht. Die bidirektionalen Zuleitungen übertragen die Schaltimpulse und Testimpulse nicht nur an den Aktor sondern erhalten von diesem eine Rückmeldung. Aus dieser Rückmeldung werden zusätzlich Informationen gewonnen, ob die Funktionen des Aktors und der Zuleitungen fehlerfrei sind. Aufgrund der verschiedenen Rückmeldungen können eventuell auftretende Fehler schnell und sicher lokalisiert und klassifiziert werden.

Zur Funktionsüberprüfung der Sicherheitsschalteranordnung werden von den Rechnereinheiten kurzzeitig die Schaltzustände geändert und die Rückmeldungen in den Rechnereinheiten dahin überprüft, ob die Funktionen der Auswertekanäle und der Aktoren fehlerfrei sind. Diese Änderung der Schaltzustände erfolgt so kurzzeitig, daß sich der Betriebszustand des Arbeitsmittels nicht ändert, d.h. der Betrieb des Arbeitsmittels wird durch die Funktionsüberprüfung nicht beeinträchtigt. Ein weiterer Vorteil dieser Anordnung besteht darin, daß die Parameter der Funktionsüberprüfung über die Rechnereinheiten einfach einstellbar sind.

Der Erfindung liegt die Aufgabe zugrunde, den Umfang der Funktionsüberprüfung bei möglichst geringem Schaltungsaufwand zu erhöhen.

Zur Lösung dieser Aufgabe sind die Merkmale des Anspruchs 1 vorgesehen. Vorteilhafte Ausführungsformen und zweckmäßige Weiterbildungen sind in den Ansprüchen 2 - 9 beschrieben.

Mittels der Spannungsüberswachungseinheit, die auf die Schalter in den Zuleitungen geführt sind, welche auf die Aktoren führen, werden die Betriebsspannungen der Rechnereinheiten überprüft, so daß von den Rechnereinheiten ausgehende fehlerhafte Steuersignale aufgrund von Über- oder Unterspannungen, die zu einem gefährlichen Ausfall der Schalter führen können, aufgedeckt werden können.

Die Funktionsüberwachung kann vorteilhafterweise so durchgeführt werden, daß die Rückleseleitungen nicht mehr auf beide Rechnereinheiten zurückgeführt werden müssen, wodurch sich der Schaltungsaufwand verringert. Vorteilhafterweise ist der Sensor über eine zweikanalige Zuleitung mit jeder Rechnereinheit verbunden, wodurch die vom Sensor zu der Rechnereinheit gelangenden Signale überwacht werden können.

Ferner ist vorteilhaft, daß die Funktionsüberprüfung unabhängig vom Signalzustand der Sensoren erfolgt.

Die Erfindung wird im nachstehenden anhand der Zeichnung erläutert. Es zeigen:
- Fig.1: Ein Blockschaltbild der Sicherheitsschalteranordnung
- Fig. 2: Ein Blockschaltbild des Aktors
- Fig. 3: Ein Impulsdiagramm der Signalzustände der bidirektionalen Zuleitungen.

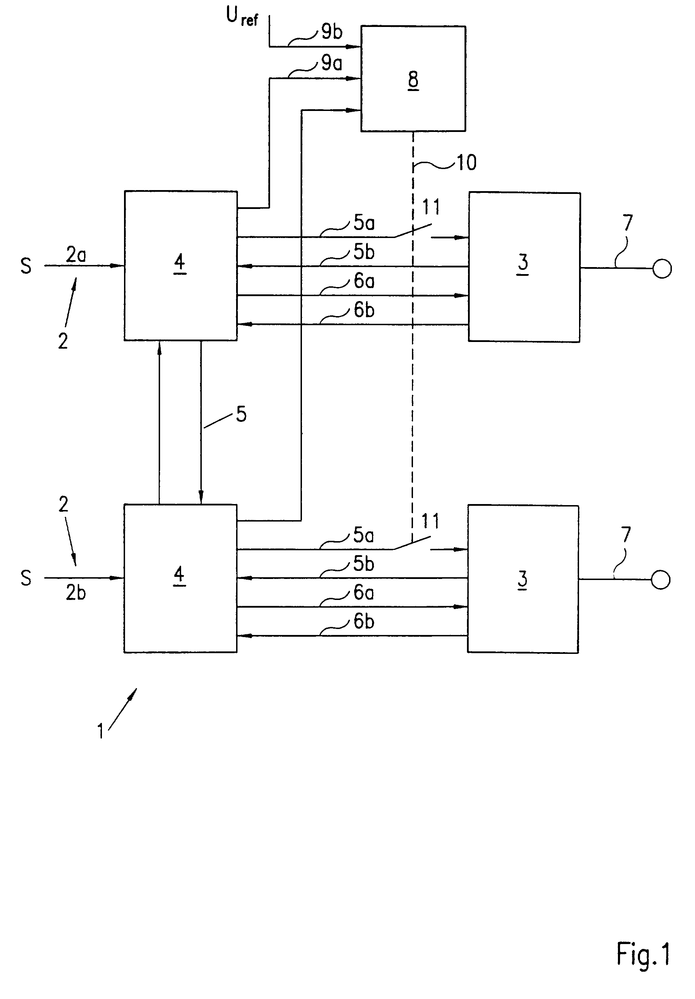

Fig. 1 zeigt eine Sicherheitsschalteranordnung 1 zum Ein- und Ausschalten der Stromversorgung eines nicht dargestellten Arbeitsmittels. Das Ein- und Ausschalten des Arbeitsmittels erfolgt mittels eines Sensorsignals S. Der Sensor ist vorzugsweise als Lichtschranke ausgebildet, in dessen Gehäuse die komplette Sicherheitsschalteranordnung integriert ist.

Der Sensor kann beispielsweise zur Überwachung eines Schutzfeldes im Bereich des Arbeitsmittels eingesetzt werden. Er weist zwei Signalzustände auf, nämlich Schutzfeld frei (Sensor aktiv) und Schutzfeld nicht frei (Sensor inaktiv).

Das binäre Sensorsignal S wird den beiden Auswertekanälen 2 der Sicherheitsschalteranordnung 1 zugeführt. Jeder Auswertekanal 2 weist eine Zuleitung 2a, 2b auf, welche den Sensor direkt mit einem Aktor 3 verbindet. Der Aktor 3 weist aus Halbleiterelementen bestehende schalterartige Mittel auf. Dem Aktor 3 ist eine Rechnereinheit 4 vorgeschaltet, die als Controller, vorzugsweise als Microcontroller, ausgebildet ist. Jede Rechnereinheit 4 ist über eine separate Zuleitung 2a, 2b mit dem Sensor verbunden, wodurch das Sensorsignal über die Rechnereinheiten 4 überwacht werden kann.

Die Rechnereinheiten 4 sind über eine bidirektionale Zuleitung 5 gekoppelt. Die Hardware der Controller ist identisch aufgebaut, während deren Software unterschiedlich ausgebildet ist. Bezüglich der Hardware sind die Controller demzufolge homogen redundant aufgebaut, während die Software diversitär ausgebildet ist. Die Rechnereinheiten 4 arbeiten im Master-Slave Betrieb, wobei der Master die Kommunikation der Rechnereinheiten 4 steuert. Die gegenseitige Kontrolle der Rechnereinheiten 4 erfolgt vorteilhafterweise in einem asynchronen Betrieb zeitversetzt.

Zur Funktionsüberprüfung des Aktors 3 ist dieser mit der Rechnereinheit 4 über zwei bidirektionale Zuleitungen 5a, 5b und 6a, 6b gekoppelt. Über die erste Zuleitung 5a, 5b werden rücklesbar die Schaltimpulse, die dem aktuellen Signalzustand des Sensors entsprechen, an den Aktor 3 übertragen. Über sämtliche Zuleitungen 5a, 5b, 6a, 6b werden Testimpulse an den Aktor 3 zu dessen Funktionsüberprüfung übertragen. Die bidirektionalen Zuleitungen 5a, 5b, 6a, 6b bestehen jeweils aus einer Signalleitung 5a, 6a zur Übertragung von Informationen an den Aktor 3 und einer Rückleseleitung 5b, 6b zur Rückmeldung vom Aktor 3 an die Rechnereinheit 4.

Jeder Aktor 3 weist einen Schaltausgang 7 auf. Nur wenn beide Schaltausgänge 7 aktiv sind, d.h. wenn beide Schaltausgänge 7 den Signalzuständen "Schutzfeld frei" des Sensors entsprechen, wird das Arbeitsmittel eingeschaltet.

Die Sicherheitsschalteranordnung 1 weist eine Spannungsüberwachungseinheit 8 auf, auf deren Eingänge Zuleitungen 9a von Ausgängen der Rechnereinheiten 4 geführt sind. Die Spannungsüberwachungseinheit 8 ist vorzugsweise von einem integrierten Schaltkreis (IC) gebildet. Eine weitere Zuleitung 9b ist von einem Eingang der Spannungüberwachungseinheit 8 auf ein Referenzspannungspotential Uᵣₑ₁, geführt. Von einem Ausgang der Spannungsüberwachungseinheit 8 ist eine Zuleitung 10 auf Schalter 11 in den Signalleitungen 5a geführt. Die schalter 11 sind vorzugsweise als Transistoren ausgebildet.

Mittels der Spannungsüberwachungseinheit 8 wird überprüft, ob sich die Betriebsspannungen der Rechnereinheiten 4 in einem vorgegebenen Sollwertbereich befinden. Ist dies nicht der Fall, so werden über die Zuleitung 10 die beiden Schalter 11 geöffnet, das Arbeitsmittel demnach deaktiviert. Dadurch wird gewährleistet, daß von den Rechnereinheiten 4 keine fehlerhaften Steuersignale aufgrund von Über- bzw Unterspannungen ausgehen.

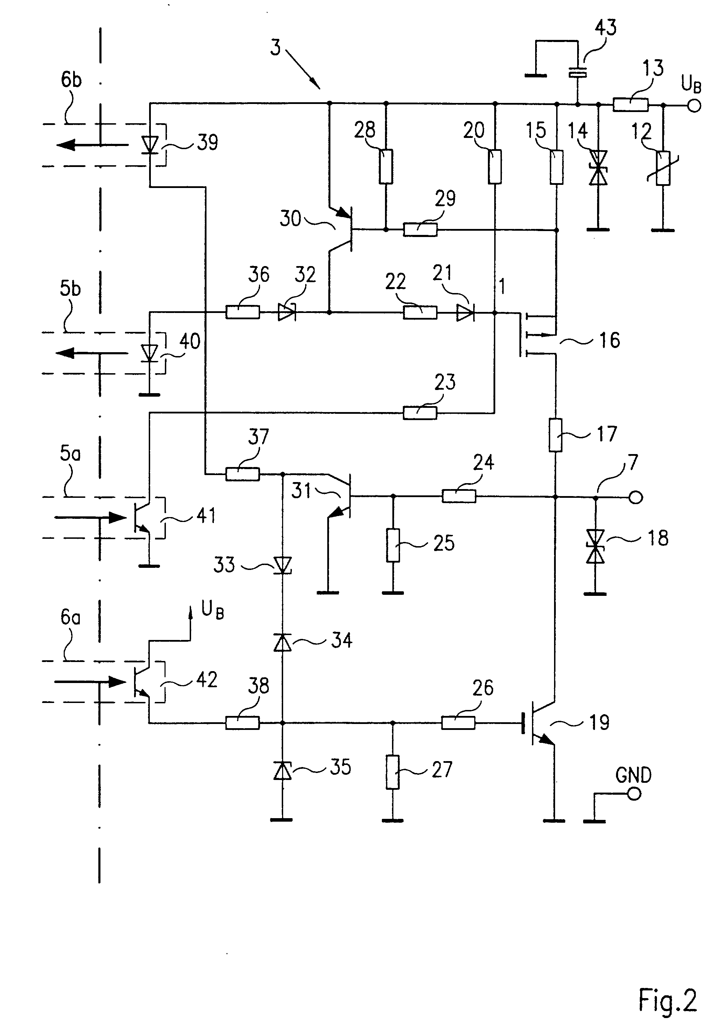

In Fig. 2 ist ein Blockschaltbild eines Aktors 3 dargestellt. An der Ausgangsseite des Aktors 3 sind ein Varistor 12, ein Widerstand 13 und eine Supressordiode 14 zum Schutz von transienten Überspannungen vorgesehen. Der Widerstand 13 dient zur zeitlichen Verzögerung von Überspannungspulsen, so daß die schnellere Supressordiode 14 nicht vor dem Varistor 12 anspricht. Von diesem Überspannungsschutz führt über einen Widerstand 15 eine Zuleitung zu einem P-Kanal MOS-Feldeffekttranssistor 16, der das schalterartige Mittel bildet. Das schalterartige Mittel ist über einen Widerstand 17 auf den Schaltausgang 7 geführt. Desweiteren führt vom Widerstand 17 eine Zuleitung zu einem Transistor 19, der auf Massepotential GND geführt ist. Der Transistor 19 wird durch eine Supressordiode 18 von Überspannungen geschützt.

Der Tansistor 16 ist durch die Widerstände 15 und 20 als eine erste Konstantstromquelle beschaltet, wodurch bei Kurzschlußtests der Strom auf einen Maximalwert begrenzt ist.

Der Widerstand 20 ist ebenso wie die Diode 21 und Widerstände 22, 23 auf das schalterartige Mittel geführt. Widerstände 24 und 25 sind auf den Schaltausgang 7 geführt. Widerstände 26 und 27 sind auf den Transistor 19 geführt. Widerstände 28 und 29 sind zwischen dem Widerstand 15 und einem Transistor 30 geschaltet. Der Transistor 30 regelt über die Diode 21 und den Widerstand 22 den Transistor 16, so daß sich eine zweite Konstantstromquelle ergibt, die über die Diode 32 auf die Rückleseleitung 5b geführt ist.

Zur Messung der Spannung am Kollektor des Transistors 19 ist ein Transistor 31 vorgesehen. Zusätzlich stellt der Transistor 31 eine Anlaufstrombegrenzung für den Transistor dar, d.h. er begrenzt den Stromfluß des Transistors 19, falls ein Kurzschluß des Schalterausgangs 7 gegen die Versorgungsspannung U_{B} vorliegen würde. Dadurch wird der Transistor 19 vor Zerstörung geschützt.

Mittel einer Zenerdionde 33 und einer Diode 34 wird im Fehlerfall der Schaltausgang 7 auf Massepotential GND geschaltet.

Widerstände 36 und 37 sind den Sendeelementen für die Rückleseleitungen 5b, 6b vorgeschaltet. Den Empfangselementen der Signalleitungen 5a, 5b sind Widerstände 23, 38 nachgeschaltet.

Die Sendeelemente für die Rückleseleitungen 6b bzw 5b sind von Optokopplern 39, 40 gebildet. Die Empfangselemente für die Signalleitungen 5a, 6a sind von Optokopplern 41 und 42 gebildet.

Die Signalleitungen 5a, 6a sind so geschaltet, daß im Reset-Zustand der Rechnereinheiten 4 die Transistoren 16 und 19 hochohmig sind. Somit kann keiner dieser Transistoren 16, 19 durch einen externen Kurzschluß zerstört werden, bevor die Rechnereinheiten 4 in Betrieb sind.

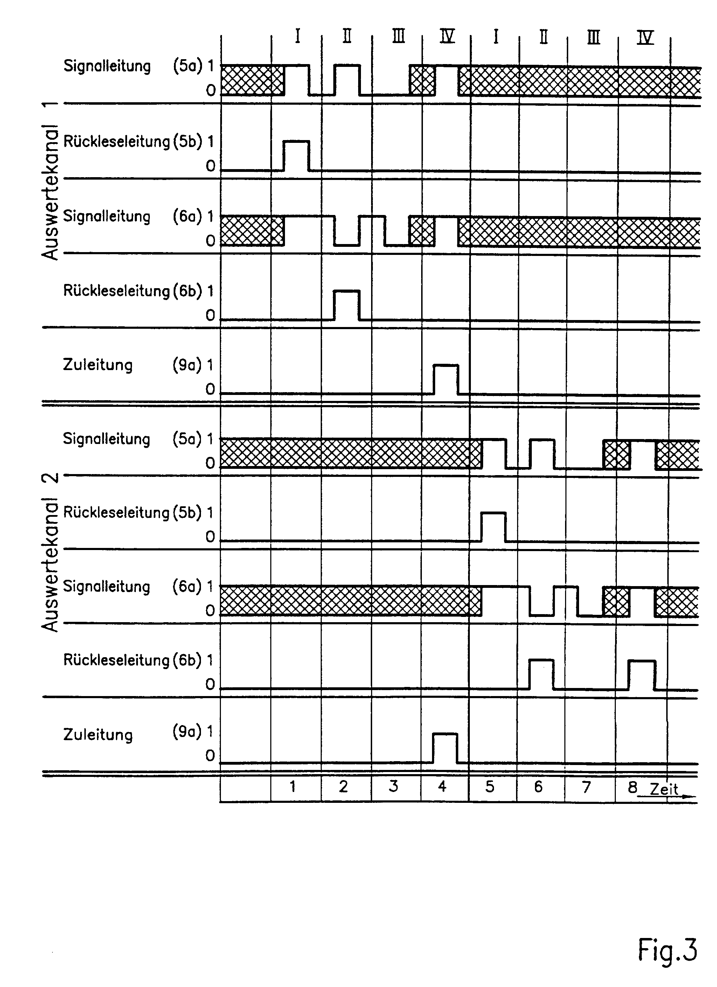

Die Funktionen der Sicherheitsschalteranordnung 1 werden im folgenden anhand von Fig. 3 erläutert.

Die Funktionsüberprüfung der Auswertekanäle 2 erfolgt unabhängig vom aktuellen Sensorzustand, d.h. unabhängig davon ob der Sensor aktiv oder inaktiv ist. Dies ist durch die schraffierten Flächen in Fig. 3 angedeutet. Die Durchführung der Funktionsüberprüfung wird von den Rechnereinheiten 4 gesteuert.

Die Rechnereinheiten arbeiten im Master-Slave Betrieb. Dies bedeutet, daß eine Rechnereinheit 4 als Master die Kommunikation über die Zuleitungen 5 steuert. Die Kommunikation erfolgt in Form einer Zwei-Bit-Parallelkommunikation, d.h. jede Rechnereinheit 4 weist eine Sende- und Empfangsleitung 5 auf.

Die Funktionskontrolle der Rechnereinheiten 4 erfolgt gegenseitig über eine time-out Funktion. Wenn eine Rechnereinheit 4 auf ein Signal der anderen Rechnereinheit 4 nicht rechtzeitig antwortet, so wird die fehlende Anwort als Fehler interpretiert.

Wie aus Fig. 3 ersichtlich ist, erfolgt die Funktionsüberprüfung in den beiden Auswertekanälen zeitversetzt. Zweckmäßigerweise erfolgt die Freigabe einer Rechnereinheit 4 zur Durchführung der Funktionsüberprüfung durch den Master. Der Übersichtlichkeit halber ist die Zeitverzögerung zwischen zwei Funktionsüberprüfungen in Fig. 3 nicht dargestellt.

Die Funktionsüberprüfung gliedert sich in Testabschnitte I, II, III, IV, Während der ersten drei Testabschnitte I, II, III wird überprüft, ob im Aktor 3 selbst eine Störung vorliegt. Im Testabschnitt IV wird die Funktion der Spannungsüberwachungseinheit 8 und der Schalter 11 überprüft.

Die in Fig. 3 dargestellten Signalfolgen stellen den fehlerfreien Fall dar.

Im Testabschnitt I werden die Signalleitungen 5a, 6a aktiviert. Bei diesem Kurzschlußtest muß im fehlerfreien Fall die Rückleseleitung 5b den Zustand aktiv und die Rückleseleitung 6b den Zustand inaktiv einnehmen.

Um den Stromfluß beim Kurzschlußtest zu begrenzen, ist der Transistor 16 durch die Widerstände 15 und 20 als Konstantstromquelle beschaltet. Zudem ist ein Kondensator 43 als Energiespeicher vorgesehen, so daß das versorgende Netzteil hiervon nicht belastet ist.

In den Testabschnitten II und III werden die Signalleitungen 5a, 6a zeitversetzt aktiviert. Im fehlerfreien Fall bleibt die Rückleseleitung 5b im inaktiven Zustand, während die Rückleseleitung 6b nur während des Testabschnitts III inaktiv ist, nicht jedoch während des Testabschnitts II.

Im Fehlerfall ergeben sich für die Rückleseleitungen 5b, 6b während der Testabschnitte I, II, III Schaltzustände, die von den in Fig. 3 dargestellten Zuständen abweichen.

In diesem Fall können die Transistoren 16, 19 durchlegiert oder hochohmig sein. Ebenso kann ein Schluß gegen Massepotential GND oder die Versorgungsspannung U_{B} vorliegen. Schließlich kann die Spannungsüberwachungseinheit 8 defekt sein oder ein Querschluß der Schaltausgänge 7 zueinander vorliegen.

Ist der Transistor 16 im Fehlerfall durchlegiert und läßt sich nicht mehr abschalten, so fließt beim Einschalten des Transistors 19 solange Strom, bis der eine Sicherung bildende Widerstand 17 anspricht und den Schaltausgang 7 von der Versorgungsspannung U_{B} abtrennt. Vor Ansprechen der Sicherung kann somit der gestörte Auswertekanal 2 noch in den sicheren Zustand übergehen, d.h. das Arbeitsmittel abschalten.

Um einen Kurzschluß des Schaltausgangs 7 nach U_{B} von den anderen Fehlerfällen zu unterscheiden, kann ein weiterer, in Fig. 3 nicht dargestellter Testabschnitt angefügt werden. In diesem Testabschnitt werden die Transistoren 16 und 19 hochohmig geschaltet. Über den Optokoppler 39 wird geprüft, ob Spannung am Schaltausgang 7 anliegt.

Ist dies nicht der Fall, so liegt kein externer Kurzschluß vor und der Schaltausgang 7 wird über den Transistor 19 auf Massepotential GND geschaltet.

Im Testabschnitt IV wird die Spannungsüberwachung der Rechnereinheit 4 überprüft. Die Rechnereinheit 4 simuliert hierzu einen Überspannungsimpuls (Signalleitungen 5a, 6a aktiv), worauf die Zuleitung 9a im fehlerfreien Fall aktiviert wird.

Zur zyklischen Funktionsüberwachung werden die Schaltzustände der Signalleitungen 5a, 6a kurzzeitig geändert. Die einzelnen Zeitintervalle "1" bis "8" liegen im Bereich von 50 - 150 µs. Diese Zeitintervalle sind somit so kurz, daß die innerhalb dieser Intervalle durchgeführten Änderungen der Schaltzustände auf den Signalleitungen 5a, 6b aufgrund der Trägheit des Arbeitsmittels keine Änderung dessen Betriebszustandes bewirken können. Die Wiederholdauer der zyklischen Funktionsüberwachung liegt im Bereich 5 - 15 ms, vorzugsweise beträgt sie 10 ms. Besonders vorteilhaft ist, daß die zyklische Funktionsüberwachung von den Rechnereinheiten 4 gesteuert wird. Über die Software in den Rechnereinheiten 4 kann die Wiederholdauer der zyklischen Funktionsüberwachung variiert werden, beispielsweise um eine Überlastung der Rechnereinheiten 4 zu vermeiden.

## Patentansprüche

1. Sicherheitsschalteranordnung (1) zum Ein- und Ausschalten der Stromversorgung eines Arbeitsmittels mittels eines Sensorsignals, welches dem Arbeitsmittel über zwei Auswertekanäle (2) zugeführt wird, wobei jeder Auswertekanal einen Aktor (3) mit aus Halbleiterelementen bestehenden schalterartigen Mitteln aufweist, welchem eine Rechnereinheit (4) vorgeschaltet ist, die mit dem Aktor (3) über zwei bidirektionale Zuleitungen (5a, 6b, 6a, 6b) verbunden ist, wobei über die erste Zuleitung (5a, 5b) rücklesbar Schaltimpulse von der Rechnereinheit (4) zum Aktor (3) übertragen werden und dort einen Schaltvorgang auslösen, und wobei über die zweite Zuleitung (6a, 6b) rücklesbar Testimpulse von der Rechnereinheit (4) zum Aktor (3) zu dessen Funktionsüberprüfung übertragen werden, wobei die Rechnereinheiten (4) über eine bidirektionale Zuleitung (5) zu deren Funktionsüberprüfung verbunden sind, und wobei von den Rechnereinheiten (4) zur Funktionsüberprüfung der Aktoren (3) die Schaltzustände der schalterartigen Mittel so kurzzeitig geändert werden, daß sich der Betriebszustand des Arbeitsmittels aufgrund seiner Trägheit nicht ändert, und wobei die Zuleitungen (5a) jeweils einen Schalter (11) aufweisen, die mittels einer Spannungsüberwachungseinheit (8) geöffnet werden, sobald sich die Betriebspannung der Rechnereinheiten (4) außerhalb eines vorgegebenen Sollwertbereichs befinden.

2. Sicherheitsschalteranordnung nach Anspruch 1, bei der die Schalter (11) von jeweils einem Transistor gebildet sind.

3. Sicherheitsschalteranordnung nach Anspruch 1 oder 2, bei der von jeder Rechnereinheit (4) eine Zuleitung (2a, 2b) zum Sensor geführt ist.

4. Sicherheitsschalteranordnung nach Anspruch 1 - 3, bei der die Rechnereinheiten (4) im Master-Slave Betrieb arbeiten.

5. Sicherheitsschalteranordnung nach einem der Ansprüche 1 - 4, bei der die Funktionsüberprüfung unabhängig vom Signalzustand des Sensors erfolgt.

6. Sicherheitsschalteranordnung nach einem der Ansprüche 1- 5, bei der die Funktionsüberprüfung aus vier nacheinander ablaufenden Testabschnitten besteht, wobei die ersten drei Testabschnitte zur Überprüfung des Aktors (3) vorgesehen sind und der vierte Testabschnitt zur Überprüfung der Betriebsspannungen der Rechnereinheiten (4) vorgesehen ist.

7. Sicherheitsschalteranordnung nach einem der Ansprüche 1 - 6, bei der das schalterartige Mittel von einem MOS-Feldeffekttransistor (16) gebildet ist.

8. Sicherheitsschalteranordnung nach Anspruch 7, bei welcher der MOS-Feldeffekttransistor (16) durch Widerstände (15) und (20) als erste Konstantstromquelle beschaltet ist.

9. Sicherheitsschalteranordnung nach Anspruch 7 oder 8, bei der ein Transistor (30) über einen Widerstand (22) und eine Diode (21) auf den MOS-Feldeffekttransistor (16) geführt ist, wobei der Transistor (30) den MOS-Feldeffekttransistor (16) über den Widerstand (22) und die Diode (21) regelt, so daß sich eine zweite Konstantstromquelle ergibt.

## Claims

1. Circuitbreaker arrangement (1) for switching the current supply of an operating means on and off by means of a sensor signal which is fed to the operating means by way of two evaluating channels (2), wherein each evaluating channel comprises an actuator (3) with switch-like means which consist of semiconductor elements and upstream of which is connected a computer unit (4), which is connected with the actuator (3) by way of two bidirectional feed lines (5a, 5b, 6a, 6b), wherein switching pulses which can be read back are transmitted by way of the first feed line (5a, 5b) from the computer unit (4) to the actuator (3) and trigger a switching process there, and wherein test pulses, which can be read back, are transmitted by way of the second feed line (5a, 5b) from the computer unit (4) to the actuator (3) for checking the function thereof, wherein the computer units (4) are connected by way of a bidirectional feed line (5) for the function checking thereof and wherein the switching states of the switch-like means are so temporarily changed by the computer units (4) for the functional checking of the actuators (3) that the operational state of the operating means are unchanged by reason of their inertia, and wherein the feed lines (5a) each have a switch (11), which switches are opened by means of a voltage monitoring unit (8) as soon as the operating voltage of the computer units (4) is disposed outside a predetermined target value range.

2. Circuitbreaker arrangement according to claim 1, in which the switches (11) are each formed by a transistor.

3. Circuitbreaker arrangement according to claim 1 or 2, in which a feed line (2a, 2b) is led from each computer unit (4) to the sensor.

4. Circuitbreaker arrangement according to claims 1 to 3, in which the computer units (4) work in master-slave operation.

5. Circuitbreaker arrangement according to one of claims 1 to 4, in which the functional checking takes place independently of the signal state.

6. Circuitbreaker arrangement according to one of claims 1 to 5, in which the functional checking consists of four successively elapsing test phases, wherein the first three test phases are provided for the checking of the actuator (3) and the fourth test phase is provided for the checking of the operating voltages of the computer units (4).

7. Circuitbreaker arrangement according to one of claims 1 to 6, in which the switch-like means is formed by a MOS field effect transistor (16).

8. Circuitbreaker arrangement according to claim 7, in which the MOS field effect transistor (16) is connected by resistances (15) and (20) as a first constant current source.

9. Circuitbreaker arrangement according to claim 7 or 8, in which a transistor (30) is led by way of a resistor (22) and a diode (21) to the MOS field effect transistor (16), wherein the transistor (30) regulates the MOS field effect transistor (16) by way of the resistor (22) and the diode (21) so that a second constant current source results.

## Revendications

1. Ensemble commutateur de sécurité (1) pour la mise en et hors circuit de l'alimentation en courant électrique d'un moyen de travail au moyen d'un signal de capteur qui est apporté au moyen de travail par l'intermédiaire de deux canaux d'interprétation (2), chaque canal d'interprétation présentant un acteur (3), doté de moyens de commutation constitués d'éléments semiconducteurs, qui est précédé d'une unité de calcul (4) qui est reliée à l'acteur (3) par l'intermédiaire de deux lignes d'amenée bidirectionnelles (5a, 6b, 6a, 6b), des impulsions de commutation étant transmises par l'intermédiaire de la première ligne d'amenée (5a, 5b), avec possibilité d'accusé de réception, de l'unité de calcul (4) à l'acteur (3) et y déclenchant un processus de commutation, et des impulsions de test étant transmises par l'intermédiaire de la deuxième ligne d'amenée (6a, 6b), avec possibilité d'accusé de réception, de l'unité de calcul (4) à l'acteur (3) pour le contrôle du fonctionnement de ce dernier, les unités de calcul (4) étant reliées entre elles par l'intermédiaire d'une ligne d'amenée bidirectionnelle (5) pour le contrôle de leur fonctionnement, et les unités de calcul (4), pour le contrôle du fonctionnement des acteurs (3), modifiant les états de commutation des moyens de commutation pendant tellement peu de temps que l'état de service du moyen de travail, du fait de son inertie, n'est pas modifié, et les lignes d'amenée (5a) présentant chacune un commutateur (11) qui, au moyen d'une unité de surveillance de tension (8), est ouvert dès que la tension de service des unités de calcul (4) se trouve en dehors d'une plage prédéfinie de valeur de consigne.

2. Ensemble commutateur de sécurité selon la revendication 1, dans lequel les commutateurs (11) sont chacun formés par un transistor.

3. Ensemble commutateur de sécurité selon la revendication 1 ou 2, dans lequel une ligne d'amenée (2a, 2b) est dirigée de chaque unité de calcul (4) vers le capteur.

4. Ensemble commutateur de sécurité selon une des revendications 1 à 3, dans lequel les unités de calcul (4) travaillent en service maître-esclave.

5. Ensemble commutateur de sécurité selon une des revendications 1 à 4, dans lequel le contrôle du fonctionnement s'effectue indépendamment de l'état de signal du capteur.

6. Ensemble commutateur de sécurité selon une des revendications 1 à 5, dans lequel le contrôle du fonctionnement est constitué de quatre parties de test qui se déroulent successivement, les trois premières parties de test étant prévues pour le contrôle de l'acteur (3) et la quatrième partie de test étant prévue pour le contrôle des tensions de service des unités de calcul (4).

7. Ensemble commutateur de sécurité selon une des revendications 1 à 6, dans lequel le moyen de commutation est formé par un transistor MOS à effet de champ (16).

8. Ensemble commutateur de sécurité selon la revendication 7, dans lequel le transistor MOS à effet de champ (16) est, au moyen de résistances (15) et (20), raccordé comme première source de courant constant.

9. Ensemble commutateur de sécurité selon la revendication 7 ou 8, dans lequel un transistor (30) est amené sur le transistor MOS à effet de champ (16) par l'intermédiaire d'une résistance (22) et d'une diode (21), le transistor (30) réglant le transistor MOS à effet de champ (16), par l'intermédiaire de la résistance (22) et de la diode (21), de telle sorte qu'on obtient une deuxième source de courant constant.
